# EUROPÄISCHE PATENTSCHRIFT

(11) **EP 1 772 316 B1**
(45) Veröffentlichungstag und Bekanntmachung des Hinweises auf die Patenterteilung: **20.06.2007**
(21) Anmeldenummer: 05021792.6
(22) Anmeldetag: 06.10.2005
(51) Int. Cl.: B60R 11/02

(54) **Geräteträger mit Saugfuss und Säule in Halbschalenbauweise**
Apparatus holder with suction cup and split column
Support d'appareil avec ventouse et colonne à demi-coques

(43) Veröffentlichungstag der Anmeldung: 11.04.2007
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-U1- 20 313 215
- DE-U1-3202005 005 86
- US-A- 5 845 885
- US-A1- 2002 166 936
- US-A1- 2003 102 419

## Beschreibung

Die Erfindung betrifft einen Geräteträger mit Saugfuß. Solche Geräteträger finden beispielsweise in Kraftfahrzeugen zur zeitweiligen Halterung von Kleincomputern, wie sie üblicherweise als PDA (personal digital assistant) bezeichnet werden, mobile Navigationsgeräten und Mobiltelefonen weit verbreitete Anwendung.

Aus einer früheren Entwicklung des Anmelders (DE 203 13 215 U1, DE 20 2004 020 393 U1) ist es schon bekannt, einen solchen Gerätehalter mit einer schachtartigen Säule auszubilden, welche den Saugfuß mit einem Gelenkmechanismus verbindet, über welchen eine Montageplatte zur Aufnahme eines Gerätehalters oder direkt ein Gerätehalter angeschlossen ist. Eine solche schachtartige Säule ist wegen der großen Starrheit der Anordnung und damit Erschütterungsfestigkeit des Geräteträgers vorteilhaft. Dabei nimmt die schachtartige Säule auch den Betätigungsmechanismus für den Saugfuß auf, von welchem lediglich der Betätigungshebel aus der Säule herausragt.

Bei der bekannten Anordnung ist die schachtartige Säule als einstückiges Bauteil ausgeführt und mit einem Anschlussstück des Saugfußes durch Verschraubung verbunden. Der Fuß der schachtartigen Säule sitzt dabei auf der Deckwand des Saugfußgehäuses auf, das wesentlich radial über den Säulenfuß übersteht.

Dokument DE 20 2005 005 863 U1 offenbart einen Geräteträger für Kleincomputer, Navigationsgeräte und Mobiltelefone bestehend aus einem Saugfuß, einer damit verbundenen schachtartigen Säule, deren Innenraum auch den Betätigungsmechanismus für den Saugfuß aufnimmt, und einem mit dem freien Ende der Säule verbundenen Gelenkmechanismus, über welchen eine Montageplatte zum Anbringen eines Gerätehalters oder der Gerätehalter direkt gelenkig mit der Säule verbunden ist,
wobei die Säule aus einer auf der Saugfuß Seite befestigten einstückigen Befestigungsstütze und aus zwei damit verbundenen komplementären Halbschalen zusammengesetzt ist, die mit ihren saugfußseitigen Rändern dem oberen Teil des Sitzes der Befestigungsstütze umgreifen und mit ihren entgegengesetzten Endbereichen Gelenkelemente des Gelenkmechanismus bilden und ein Gelenkglied des Gelenkmechanismus spannbar zwischen sich ergreifen.

Aufgabe der Erfindung ist es, das Konzept einer solchen Konstruktion noch weiter zu verbessern und dabei den Gegebenheiten einer Anbringung des Saugfußes an der Windschutzscheibe in besonderem Maße Rechnung zu tragen, die als völlig glatte Fläche als geeignetster Anbringungsort zur Verfügung steht, aber gerade bei modernen Fahrzeugen sehr stark geneigt ist.

Diese Aufgabe wird erfindungsgemäß durch die im Anspruch 1 angegebene Anordnung gelöst. Vorteilhafte Ausgestaltungen der Erfindung sind Gegenstand der Unteransprüche.

Erfindungsgemäß ist die schachtartige Säule aus zwei miteinander zu verbindenden Halbschalen ausgebildet, die mit ihrem unteren Randbereich den Fußrand des Saugfußgehäuses klemmend umgreifen.

Dies bringt eine Reihe von Vorteilen: Dadurch, daß der untere Rand der Säulenhalbschalen das Saugfußgehäuse an dessen Fußrand umgreifen und nicht oben auf dem Gehäuse oder auf dem oberen Teil des Sitzes der Befestigungsstütze aufsitzen, wie bei der herkömmlichen Konstruktion, ergibt sich eine erhöhte Stabilität der ganzen Anordnung sowie auch äußerlich ein geschlosseneres Ansehen. Durch den Aufbau der Säule aus zwei miteinander zu verspannenden Halbschalen wird eine bananenartig gekrümmte Form der Säule möglich, was eine günstigere Anordnung des Gerätehalters an einer stark geneigten Windschutzscheibe ermöglicht. Außerdem wird die Montage des gesamten Geräteträgers einschließlich des oben an der Säule anzubringenden Gelenkmechanismus einfacher und zweckmäßiger.

Die Erfindung wird nachstehend anhand eines Ausführungsbeispiels unter Bezugnahme auf die anliegenden Zeichnungen mehr im einzelnen beschrieben. In den Zeichnungen zeigt:
- Fig. 1: eine aufgeschnittene Seitenansicht einer Geräteträgers nach der Erfindung mit einem daran angebrachten Gerätehalter,
- Fig. 2: eine gegenüber der Darstellung in Fig. 1 um 90° gedrehte Ansicht des Geräteträgers, und zwar mit Bezug auf Fig. 1 von links gesehen, und mit in einer anderen Position befindlichen Gerätehalter, und
- Fig. 3: eine auseinandergezogene perspektivische Darstellung des Geräteträgers mit Gerätehalter.

Der in den Zeichnungen dargestellte Geräteträger besteht aus einer schachtartigen Säule 1, die zwischen einem unten angeordneten Saugfuß 2 mit Betätigungsmechanismus 3 und einem oben an der Säule angeordneten Gelenkmechanismus 4 mit einer Montageplatte 5 verläuft. Auf der Montageplatte ist ein Geräteträger 6 montiert, der zur Aufnahme eines Kleincomputers, eines Navigationsgeräts, oder eines Mobiltelefons dient und mittels des Gelenkmechanismus 4 in jede beliebige gewünschte Stellung positioniert und in dieser Stellung arretiert werden kann.

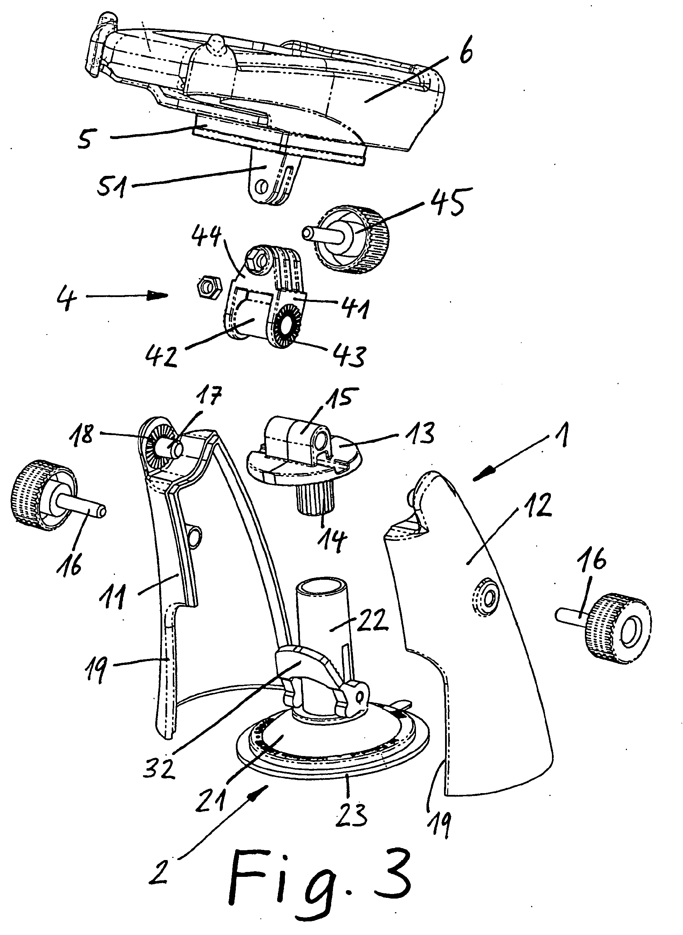

Die auseinandergezogene Darstellung nach Fig. 3 läßt die Einzelheiten der einzelnen Bauteile erkennen.

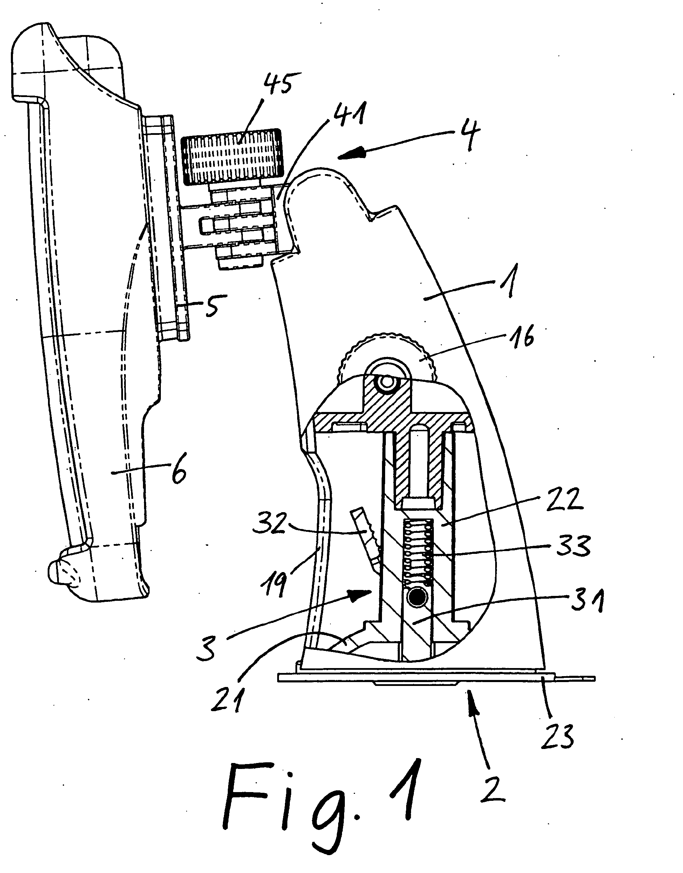

Die schachtartige und bananenförmig gekrümmte Säule 1 besteht aus zwei komplementären Halbschalen 11 und 12. Der Saugfuß 2 besteht aus einem Saugfußgehäuse 21 mit einer sich davon nach oben erstreckenden und damit einteilig ausgebildeten Hülse 22, einer Saugermembran 23 und einem Betätigungsmechanismus 3, der einen in Fig. 1 sichtbaren, mit dem Mittenbereich der Saugermembran 23 verbundenen Schaft 31 und einen Betätigungshebel 32 umfaßt, der mit dem Schaft 41 mittels eines Gelenkstifts gelenkig verbunden ist, der durch den Schaft und diametral gegenüberliegende Schlitze der Hülse 22 in die gegabelten Enden des Betätigungshebels 32 verläuft, die sich mit Exzenternocken auf der Oberseite des Saugfußgehäuses abstützen. Durch Schwenken des Betätigungshebels zwischen einer oberen und einer unteren Stellung ist die Saugermembran 23 über den Schaft 31 zwischen einer Lösestellung und einer Arbeitsstellung bewegbar. Wie ebenfalls aus Fig. 1 hervorgeht, ist in der Hülse 22 eine ebenfalls zum Betätigungsmechanismus 3 gehörende Druckfeder 33 angeordnet, die auf das obere Ende des Schafts 31 drückt und diese nach unten in die Lösestellung der Saugermembran 23 vorspannt.

In den oberen Endteil der Hülse 22 ist ein Montageblock 13 für die beiden Halbschalen 11 und 12 mit einem nach unten weisenden Zapfen 14 befestigt. Der Montageblock 13 weist weiter eine Gewindemuffe 15 auf, in welche von beiden axialen Enden her Spannschrauben 16 einschraubbar sind, die durch jeweils eine der beiden Halbschalen 11, 12 hindurchverlaufen und mit Drehgriffen in Gestalt beispielsweise gerändelter Köpfe versehen sind, wie beim Ausführungsbeispiel dargestellt. Statt gerändelter Köpfe können beispielsweise auch Flügelköpfe vorgesehen sein, wie sie bei Flügelschrauben bekannt sind. Ansonsten hat der Montageblock 13 eine scheibenartige Form, wie dargestellt, wobei der Scheibenumfang Anlageflächen für die Innenwandungen der beiden Halbschalen 11, 12 bildet. Der Montageblock 13 dient also zusammen mit den Spannschrauben 16 gleichzeitig zur Montage der beiden Halbschalen 11, 12 der schachtartigen Säule 1 aneinander und zur Verbindung der Säule 1 mit dem Saugfuß 2. Zu letzterem Zweck kann der Zapfen 14 des Montageblocks 13 in die Hülse 22 des Saugfußes 2 eingeklebt, eingeschweißt, eingepresst, drehgesichert eingeklipst oder auf andere Weise darin befestigt sein.

Wie aus Fig. 3 ersichtlich ist, sind die Halbschalen 11, 12 der Säule 1 an ihren einander zugewandten Rändern mit komplementären Formschlussprofilen ausgebildet, so daß sie bei der Montage ineinandergreifen und sich an ihren Rändern formschlüssig überdecken. Die unteren Ränder der beiden Halbschalen 11, 12 umgreifen bei der Montage der Säule 1 den unteren Rand des Saugfußgehäuses 21, wobei die Anordnung so getroffen ist, daß dieses Umgreifen leicht spannend erfolgt, so daß ein fester Sitz der unteren Ränder der Säulenhalbschalen auf dem Saugfuß gewährleistet ist, und die Anordnung ist außerdem vorzugsweise so getroffen, daß der untere Rand des Saugfußgehäuses nach unten nicht über die umgreifenden Ränder der Halbschalen übersteht, so daß im Gebrauch, wenn der Saugfuß in seine Saugstellung gebracht ist, die Säule 1 mit den unteren Rändern ihrer Halbschalen direkt auf der Saugermembran aufsitzt und dadurch die Säule sich über die Saugermembran direkt auf der Haltefläche, an welcher der Saugfuß festgesaugt ist, abstützt und damit eine besonders stabile und erschütterungsfeste Halterung des jeweiligen Geräts gewährleistet.

Wie weiter aus Fig. 3 und auch aus den übrigen Figuren erkennbar ist, sind die oberen Endbereiche der beiden Halbschalen 11, 12 der Säule so ausgebildet, daß sie zwischen sich ein Gelenkglied 41 des Gelenkmechanismus 4 aufnehmen. Beim Ausführungsbeispiel ist der Gelenkmechanismus 4 als Doppelscharniergelenk mit zwei miteinander verbundenen, um zueinander orthogonale Achsen drehbaren Einzelscharniergelenken ausgebildet. Die oberen Endbereiche der Halbschalen 11, 12 weisen daher jeweils einen Zapfen 17 auf, der in eine Buchse 42 des Gelenkglieds 41 eingreift. Außerdem weist der Endbereich jeder Halbschale 11, 12 um den jeweiligen Zapfen 17 herum einen eingeformten radialen Zahnkranz 18 auf, der mit einem komplementären Zahnkranz an der jeweiligen Stirnseite der Buchse 42 des Gelenkglieds einen Rastmechanismus bildet. Die oberen Endbereiche der Halbschalen 11, 12 der Säule 1 bilden so mit der Buchse 42 des Gelenkglieds 41 ein Scharniergelenk, das um die geometrische Achse der Zapfen 17 drehbar und in seiner jeweiligen Drehposition mittels der komplementären Zahnkränze arretierbar ist. Die Arretierung dieses Scharniergelenks ist gegeben, wenn die Spannschrauben 16 der beiden Halbschalen festgespannt sind. Durch gewisses Aufdrehen der Spannschrauben 16 kann die Spannung der Halbschalen 11, 12 gegeneinander gelockert werden, so daß das Gelenkglied 41 relativ zur Säule schwenkbar ist, wobei die komplementären, miteinander zusammenwirkenden Zahnkränze 18, 43 ratschend übereinandergleiten, und nach Erreichen der gewünschten Schwenkstellung des Gelenkglieds wird das Scharniergelenk durch Festdrehen der Spannschrauben 16 wieder arretiert.

Das andere, dazu orthogonale Scharniergelenk ist durch am Gelenkglied 41 gebildete, beabstandete und mit fluchtenden Bohrungen versehene Laschen 44 und durch zwischen diese greifende, an der Montageplatte 5 angeordnete und ebenfalls mit fluchtendenden Bohrungen versehene komplementäre Laschen 51 sowie eine durch die fluchtenden Bohrungen hindurchgesteckte und gleichzeitig den Scharnierzapfen bildende Spannschraube 45 gebildet. Beim Festziehen der Spannschraube 45 werden die ineinandergreifenden Laschen 44, 51 dieses zweiten Scharniergelenks zusammengespannt und dadurch dieses Scharniergelenk in seiner jeweiligen Drehstellung arretiert. Durch leichtes Lösen der Spannschraube 45 können die Laschen 44, 51 relativ zueinander gedreht werden.

Es versteht sich, daß die Ausbildung des Gelenkmechanismus 4 bei der dargestellten Ausführungsform als Doppelscharniergelenk lediglich ein mögliches Ausführungsbeispiel darstellt und der Gelenkmechanismus 4 auch in anderer Weise ausgebildet sein kann, insbesondere als Kugelgelenkmechanismus. Die oberen Endbereiche der Halbschalen 11, 12, die als Gelenkelemente des Gelenkmechanismus ausgebildet sind, wären dann jeweils als Kugelpfannen ausgebildet, so daß sie zwischen sich ein als Gelenkkugel ausgebildetes Gelenkglied spannend aufnehmen würden. Die Arretierung eines solchen Kugelgelenkmechanismus in der jeweils gewählten Position und das Lösen des Gelenkmechanismus zum Zwecke des Verstellens würde dann in der gleichen Weise durch Spannen bzw. Lösen der Spannschrauben 16 erfolgen. Das eine Gelenkkugel aufweisende Gelenkglied kann dann direkt mit der Montageplatte 5 verbunden sein. Ein als Kugelgelenkmechanismus ausgebildeter Gelenkmechanismus 4 könnte auch als Doppelkugelgelenk mit einem knochenartigen Gelenkglied mit zwei durch einen Stiel verbundenen Gelenkkugeln ausgebildet sein, von denen die eine Gelenkkugel zwischen den als Gelenkpfannen ausgebildeten oberen Endbereichen der Halbschalen 11, 12 eingespannt und die andere Gelenkkugel in einem der Montageplatte 5 zugeordneten Pfannenelement aufgenommen würde. Damit wäre eine besonders universelle Einstellbarkeit der Geräteposition möglich.

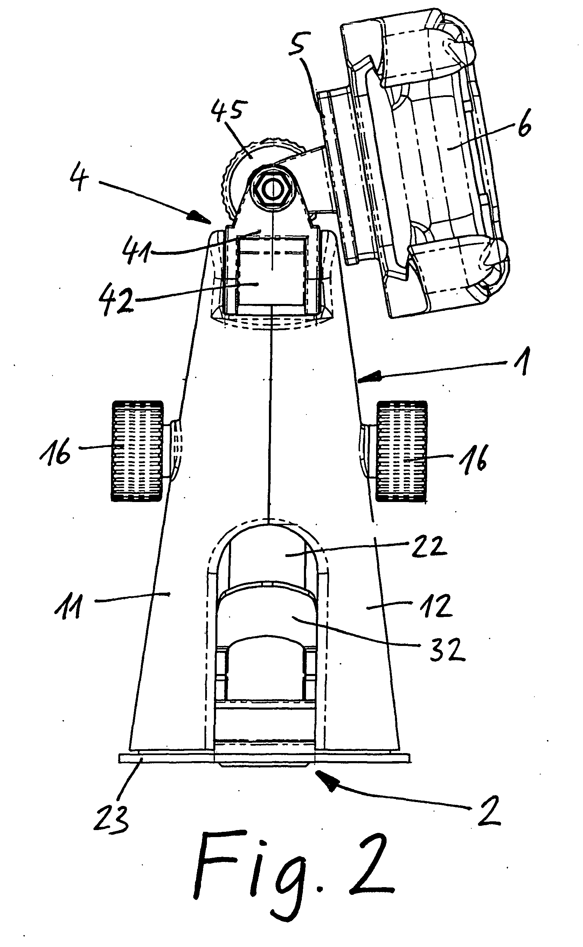

Wie aus den Zeichnungen auch hervorgeht, sitzt der Betätigungsmechanismus 3 des Saugfußes 2 einschließlich des Betätigungshebels 32 vollständig innerhalb des von der schachtartigen Säule 1 umschlossenen Hohlraums. Die Säule 1 weist im Bereich des Betätigungshebels 32 eine Aussparung auf, die durch Einschnitte 19 in jeder der beiden Halbschalen 11, 12 gebildet ist, die in Fig. 3 sichtbar sind. Die Aussparung insgesamt, durch welche der Betätigungshebel 32 zugänglich ist, ist auch in den Fig. 1 und 2 sehr anschaulich dargestellt.

Der Gerätehalter 6 kann mittels eines Schnellkupplungsmechanismus (nicht dargestellt) mit der Montageplatte 5 lösbar verbunden sein. Dies ermöglicht das leichte Anbringen und Lösen von an das jeweilige Gerät angepassten Gerätehaltern wahlweise an der Montageplatte. Alternativ kann aber auch der Gerätehalter fest, z.B. durch Verschraubung, mit der Montageplatte verbunden sein, oder es kann auf eine Montageplatte ganz verzichtet werden und der Gerätehalter direkt mit dem jeweiligen Gelenkglied des Gelenkmechanismus 4, beim Ausführungsbeispiel mit den Laschen 51, versehen sein.

## Patentansprüche

1. Geräteträger für Kleincomputer, Navigationsgeräte und Mobiltelefone, bestehend aus einem Saugfuß (2), einer damit verbundenen schachtartigen Säule (1), deren Innenraum auch den Betätigungsmechanismus (3) für den Saugfuß (2) aufnimmt, und einem mit dem freien Ende der Säule (1) verbundenen Gelenkmechanismus (4), über welchen eine Montageplatte (5) zum Anbringen eines Gerätehalters (6) oder der Gerätehalter direkt gelenkig mit der Säule (1) verbunden ist,
**dadurch gekennzeichnet, daß** die Säule (1) aus zwei komplementären Halbschalen (11, 12) zusammengesetzt ist, die mit ihren saugfußseitigen Rändern den Saugfuß (2) umgreifen und mit ihren entgegengesetzten Endbereichen Gelenkelemente (17) des Gelenkmechanismus (4) bilden und ein Gelenkglied (42) des Gelenkmechanismus (4) spannbar zwischen sich ergreifen.

2. Geräteträger nach Anspruch 1, wobei die beiden Halbschalen (11, 12) an ihren einander zugewandten Rändern miteinander sich überdeckenden oder ineinandergreifenden Randbereichen formschlüssig miteinander verbunden sind.

3. Geräteträger nach Anspruch 1 oder 2, wobei die beiden Halbschalen (11, 12) mit ihren saugfußseitigen Rändern den der Saugermembran (23) zugewandten Rand des Saugfußgehäuses (1) umgreifen.

4. Geräteträger nach einem der Ansprüche 1 bis 3, wobei die beiden Halbschalen (11, 12) mittels mindestens einer Spannschraube (16) gegeneinander spannbar sind.

5. Geräteträger nach Anspruch 4, wobei die beiden Halbschalen (11, 12) mittels jeweils einer Spannschraube (16) gegen einen innerhalb der Säule (1) angeordneten und mit dem Saugfuß (2) verbundenen Montageblock (13) spannbar sind.

6. Geräteträger nach einem der Ansprüche 1 bis 5, wobei der Betätigungsmechanismus (3) des Saugfußes (2) einen Betätigungshebel (32) aufweist, der durch eine Aussparung der Säule (1) zugänglich ist, die wiederum durch gegenüberliegende Einschnitte (19) in jeder der Halbschalen (11, 12) gebildet ist.

7. Geräteträger nach einem der Ansprüche 1 bis 6, wobei die Säule (1) eine in der Trennebene zwischen den beiden Halbschalen (11, 12) bananenartig gekrümmte Gestalt hat.

8. Geräteträger nach einem der Ansprüche 1 bis 7, wobei die vom Saugfuß entfernten Endbereiche der Halbschalen (11, 12) mit radialen Zahnkränzen (18) ausgebildet sind, die mit komplementären Zahnkränzen (43) eines dazwischen angeordneten Scharniergelenkelements (42) zusammenwirken.

9. Geräteträger nach einem der Ansprüche 1 bis 7, wobei die vom Saugfuß entfernten Endbereiche der Halbschalen (11, 12) als Kugelpfannen zum Zusammenwirken mit einem Kugelgelenkglied ausgebildet sind.

## Claims

1. A device mount for small computers, navigation devices and mobile telephones, which consists of a suction base (2), a shaft-type column (1) which is connected thereto and whose interior also accommodates the actuating mechanism (3) for the suction base (2), and of an articulation mechanism (4), which is connected to the free end of the column (1) and through which a mounting plate (5) for mounting a device holder (6) is connected to the column (1) in an articulated manner or through which the device holder is directly connected to said column in an articulated manner,
**characterized in that** the column (1) is composed of two complementary half-shells (11, 12) which, with their edges at the suction-base end, encompass the suction base (2), and, with their opposite end regions, constitute articulation elements (17) of the articulation mechanism (4) and grip between each other, so as to permit clamping, an articulation member (42) of the articulation mechanism (4).

2. The device mount according to claim 1, wherein the two half-shells (11, 12) are joined to one another in a form-fitting manner at their mutually facing edges of mutually overlapping or mutually engaging edge regions.

3. The device mount according to either of claims 1 or 2, wherein the two half shells (11, 12), with their edges at the suction-base end, encompass the edge of the suction-base housing (1) that faces towards the suction membrane (23).

4. The device mount according to any one of claims 1 to 3, wherein the two half shells (11, 12) can be tightened towards one another by means of at least one tightening screw (16).

5. The device mount according to claim 4, wherein the two half-shells (11, 12) can each be tightened, by means of a respective tightening screw (16), against an assembly block (13) which is disposed within the column (1) and which is connected to the suction base (2).

6. The device mount according to any one of claims 1 to 5, wherein the actuating mechanism (3) of the suction base (2) has an actuating lever (32) which is accessible through a recess in the column (1), said recess, in turn, being constituted by opposing cuttings (19) in each of the half-shells (11, 12).

7. The device mount according to any one of claims 1 to 6, wherein the column (1) has a banana-like curved form in the parting plane between the two half-shells (11, 12).

8. The device mount according to any one of claims 1 to 7, wherein the end regions of the half-shells (11, 12) that are distant from the suction base are formed with radial sprockets (18) which co-operate with complementary sprockets (43) of an intermediately disposed hinge joint element (42).

9. The device mount according to any one of claims 1 to 7, wherein the end regions of the half-shells (11, 12) that are distant from the suction base are formed as ball sockets for co-operation with a ball joint member.

## Revendications

1. Porte-appareil pour mini-ordinateurs, appareils de navigation et téléphones mobiles, comprenant un pied ventouse (2), une colonne (1) en forme de gaine reliée à celui-ci, dont l'espace intérieur abrite aussi le mécanisme d'actionnement (3) pour le pied ventouse (2) et un mécanisme d'articulation (4) relié à l'extrémité libre de la colonne (1), par l'intermédiaire duquel une plaque de montage (5) destinée à la pose d'un support d'appareil (6) ou le support d'appareil directement est relié de manière articulée à la colonne (1),
**caractérisé en ce que** la colonne (1) est composée de deux demi-coques (11, 12) complémentaires qui entourent le pied ventouse (2) avec leurs bords côté pied ventouse et forment avec leurs zones d'extrémité opposées des éléments d'articulation (17) du mécanisme d'articulation (4) et saisissent entre elles de manière à pouvoir le serrer un élément d'articulation (42) du mécanisme d'articulation (4).

2. Porte-appareil selon la revendication 1, dans lequel les deux demi-coques (11, 12) sont reliées entre elles avec correspondance de forme sur leurs bords tournés l'un vers l'autre avec leurs zones de bord se recouvrant l'une l'autre ou s'engageant l'une dans l'autre.

3. Porte-appareil selon la revendication 1 ou 2, dans lequel les deux demi-coques (11, 12) entourent, avec leurs bords côté pied ventouse, le bord du boîtier de pied ventouse (1) tourné vers la membrane de ventouse (23).

4. Porte-appareil selon l'une des revendications 1 à 3, dans lequel les deux demi-coques (11, 12) peuvent être serrées l'une contre l'autre au moyen d'au moins une vis de serrage (16).

5. Porte-appareil selon la revendication 4, dans lequel les deux demi-coques (11, 12) peuvent être serrées chacune au moyen d'une vis de serrage (16) contre un bloc de montage (13) disposé à l'intérieur de la colonne (1) et relié au pied ventouse (2).

6. Porte-appareil selon l'une des revendications 1 à 5, dans lequel le mécanisme d'actionnement (3) du pied ventouse (2) présente un levier d'actionnement (32) qui est accessible par un évidement de la colonne (1) lequel, à son tour, est formé par des encoches (19) opposées dans chacune des demi-coques (11, 12).

7. Porte-appareil selon l'une des revendications 1 à 6, dans lequel la colonne (1) a une configuration courbe en forme de banane dans le plan de séparation entre les deux demi-coques (11, 12).

8. Porte-appareil selon l'une des revendications 1 à 7, dans lequel les zones d'extrémité des demi-coques (11, 12) éloignées du pied ventouse sont réalisées avec des couronnes dentées (18) qui coopèrent avec des couronnes dentées complémentaires (43) d'un élément d'articulation à charnière (42) disposés entre elles.

9. Porte-appareil selon l'une des revendications 1 à 7, dans lequel les zones d'extrémité des demi-coques (11, 12) éloignées du pied ventouse sont réalisées comme des coussinets sphériques pour coopérer avec un élément d'articulation à rotule.
